Europäisches Patentamt

European Patent Office

Office européen des brevets

(11) Publication number: **0 047 037**
**B1**

(12) **EUROPEAN PATENT SPECIFICATION**

(45) Date of publication of patent specification: **12.09.84**

(21) Application number: **81200943.9**

(22) Date of filing: **27.08.81**

(51) Int. Cl.³: **C 03 B 37/02,** C 03 B 37/075,
G 02 B 5/172

(54) **Method of producing an optical fibre having a core which has a non-circular cross-section and double crucible for use in this method.**

(30) Priority: **30.08.80 NL 8004960**

(43) Date of publication of application:
**10.03.82 Bulletin 82/10**

(45) Publication of the grant of the patent:
**12.09.84 Bulletin 84/37**

(84) Designated Contracting States:
**AT BE DE FR GB NL SE**

(56) References cited:
**GB-A-1 448 080**
**US-A-4 106 847**

(73) Proprietor: **N.V. Philips' Gloeilampenfabrieken**
**Groenewoudseweg 1**
**NL-5621 BA Eindhoven (NL)**

(72) Inventor: **Jochem, Cornelis Marinus Gerrit**
**c/o INT. OCTROOIBUREAU B.V. Prof. Holstlaan 6**
**NL-5656 AA Eindhoven (NL)**
Inventor: **Severin, Petrus Johannes Wilhelmus**
**c/o INT. OCTROOIBUREAU B.V. Prof. Holstlaan 6**
**NL-5656 AA Eindhoven (NL)**

(74) Representative: **Auwerda, Cornelis Petrus et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to a method of producing an optical fibre having a core which has a non-circular cross-section while using a double crucible, the outflow opening of the inner crucible being wholly within the space enclosed by the outer crucible. Optical fibres of this nature can be used when it is necessary to suppress coupling between modes which propagate in different directions of polarization. This is also desirable when the pulse dispersion in a monomode fibre is reduced by compensation of material dispersion by waveguide dispersion to such an extent that the chromatic dispersion amounts to some picosecs/km.nm. In order to maintain this level, it is desirable that the fibre propagates the signal in only one polarizaton state. An optimum decoupling can be obtained if the fibres having the desired geometry are in a noncircular stress condition. (UK Patent Application GB—A—20 12 983). Fibres of this type may be used as monomode telecommunication fibres; they may be used as sensors, for example, in the measurement of a magnetic field, or more generally may be used in devices for measuring physical effects which produce mechanical stress in optical fibres.

The invention also relates to a double crucible suitable for putting this method into effect, comprising an inner crucible intended for the core glass material and an outer crucible, the outer crucible being intended for the cladding glass. Optical fibres consisting of a light-conducting core having a cladding which has a lower index of refraction than the core material, the core having a non-circular, for example elliptical, cross-section are known per se. With these known fibres having a cladding which directly borders on the core, the shape of the cross-section of the fibre corresponds in general with the core shape. A fibre having a core which has an elliptical cross-section may itself have an elliptical cross-section, see in this respect, for example, United States Patent Specification US—A—4,106,847.

The UK Patent Specification GB—A—1 448 080 describes a method of producing an optical fibre using a double crucible. A double crucible suggested for use in such method has an inner crucible with an outflow opening being wholly within the space enclosed by the outer crucible and the glass in the outer crucible (cladding glass) passes through a channel surrounding the discharge end of the inner crucible.

The invention has for its object to provide a method of producing an optical fibre of circular cross-section having a core which has a non-circular cross-section, a double crucible being used in this method.

A further object of the invention is to provide a double crucible suitable for producing an optical fibre having a circular cross-section, the core having a non-circular cross-section.

It has been found that an optical fibre of the above-described structure can be obtained by means of the method according to claim 1.

One of the non-circular cylindrical boundary walls may have, for example, an elliptical cross-section.

Preferably, before it comes into contact with the core glass, the cladding glass is passed through a channel comprising an interior boundary wall which has a non-circular, for example an elliptical, cross-section, said wall being elliptical cylindrical.

In accordance with the another aspect of the invention there is provided a double crucible according to claim 5.

The degree to which the core-section deviated from the circular is determined inter alia by the shape and dimension of the restriction which the cladding glass experiences in the channel surrounding the discharge end of the inner crucible and by the distance over which the core glass flows in contact with the cladding glass through the space enclosed by the outer crucible. The shorter this distance the more the cross-section of the core will deviate from the circular for a given geometry of the channel. It is further important to choose the glass compositions such that the surface tension in the interface between the glasses is as low as possible. The method of the invention offers practical advantages compared with a method in which the outflow opening of the inner crucible is not circular, for example, elliptical. The method can be carried into effect with crucibles of a customary shape and dimensions, that is to say having outflow apertures of a circular cross-section. The desired geometry can be obtained by means of inserts. The effect of the method is, however, increased if the outflow opening of the inner crucible also deviates from the circular; for example, when the geometry is elliptical, this outflow opening is also given an elliptical cross-section.

The method of the invention furnishes the additional advantage that the inner and the outer crucible including their discharge ends may both have circular cross-sections. The glass flow in the outer crucible can be limited by means of simple inserts.

The crucibles and inserts may be produced of quartz or platinum.

The method of the invention will now be further explained with reference to the accompanying drawing. There is also shown an embodiment of a double crucible of the invention in a cross-sectional view.

In the drawing:

Figure 1 shows schematically and in cross-section a double crucible,

Figure 2 shows a cross-section II—II of Figure 1,

Figure 3 shows a cross-section III—III of Figure 1,

Figure 3a is a cross-sectional view of a ring-shaped channel,

Figure 4, shows schematically and in cross-section a double crucible.

Figure 5 shows a cross-section V—V of Figure 4,

Figure 6 shows a cross-section VI—VI of Figure 4,

Figure 7 is a cross-sectional view of a double crucible,

Figure 8 is a cross-sectional view of an optical fibre produced using the double crucible shown in Figures 1 and 7.

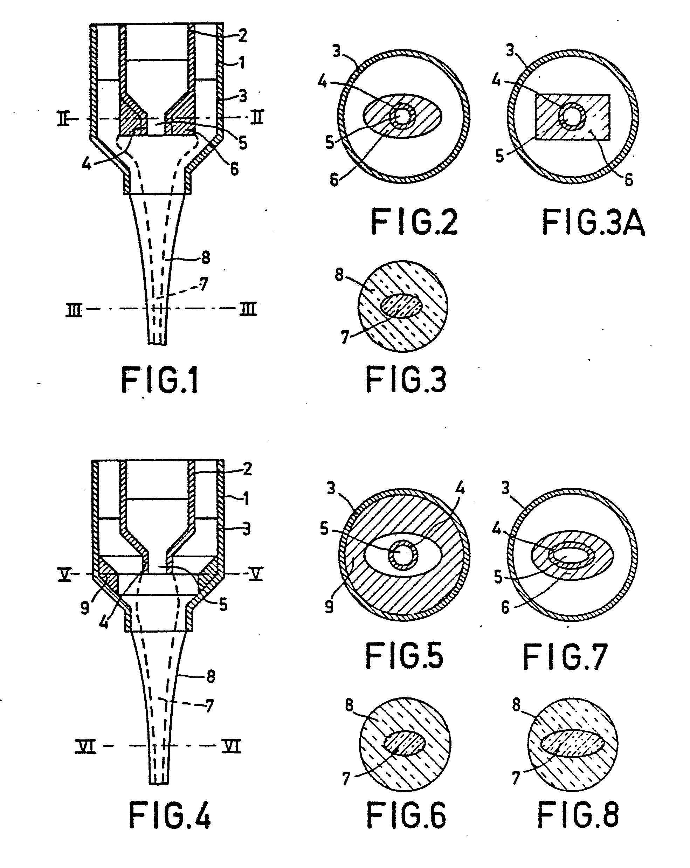

The double crucible for fabricating optical fibres as shown in Figure 1 comprises an outer crucible 1 and an inner crucible 2, the outflow opening of which is wholly within the space enclosed by the outer crucible 1. Figure 2 shows a cross-section in the plane II—II of Figure 1. The cross-sectional view shows the circular wall 3 of the outer crucible 1 and the circular wall 4 of the outflow channel 5 of the inner crucible 2. An insert 6 having an elliptical cross-section is provided around the outflow opening 5 in the space enclosed by the outer crucible 1. Thus, there is formed a ring-shaped channel having a boundary wall the cross-section of which deviates from the circular. It appears that the extent to which the glass fibre core is of the same shape as the cross-section of the insert 6 depends on the distance between the outflow opening of the inner crucible, that is to say the ends of the outflow channel 5 projecting into the space enclosed by the outer crucible 1, and the point at which the glass flows from the outer crucible 1. The shorter this distance the smaller the influence of any difference in surface tension between the glasses onto the shape of the core. Figure 3 shows a cross-section through an optical fibre on III—III in Figure 1 with core 7 and cladding 8.

It is not necessary for the geometry of the channel to be elliptical, the restrictions may alternatively have a rectangular shape, see the cross-section shown in Figure 3a, or any other desired shape. The degree to which the cross-section of the core in the optical fibres is of the same shape as the restriction depends in the first instance on the distance over which the core glass flows in contact with the cladding glass through the space enclosed by the outer crucible.

Figure 4 shows a still further embodiment of a crucible with which the method of the invention can be used. The reference numerals corresponding to those in the preceding Figures have the same meaning. An insert 9 is provided in the outer crucible 1, this insert having an interior boundary wall of an elliptical cross-section, see cross-section on IV—IV in Figure 5.

Figure 6 shows a cross-section of the fibre VI—VI.

The method is *inter alia* carried out with glasses having compositions as shown in the following Table, whose difference in surface tension is substantially zero.

TABLE
Glass compositions in mole%
and index of refraction

|  | core | cladding |
|---|---|---|
| $SiO_2$ | 44,5 | 45 |
| $B_2O_3$ | 35 | 35 |
| $Nb_2O_5$ | 0,5 | — |
| $Na_2O$ | 20 | 20 |
| $n_d$ | 1,5260 | 1,5213 |

A fibre having a circular cross-section 175 $\mu$m in diameter and a core having a strip-shaped cross-section (length 31 $\mu$m, width 1,4 $\mu$m).

The glasses were obtained by fusing at 1300°C the said oxides in the indicated molar ratio in the form of their oxides, $Na_2O$ excepted which was added in a molecularly equivalent quantity as sodium carbonate. The fibre was produced using a double crucible with an inner crucible which in the region of the outflow opening had a cross-section as shown in Fig. 7. The fibres were drawn at a temperature of 1050°C. The present invention relates only to the obtention of the desired geometry. A non-circularly symmetrical stress condition can be realised by choosing the composition of the core and cladding glasses such that the cladding glass has the lower coefficient of thermal expansion. At the fibre the cladding is then subjected to a compressive stress. The influence of different oxides on the coefficient of expansion of glass is extensively described in the literature (see inter alia H. Schloze, Glas, Natur Struktur und Eigenschaften 1977 2nd edition pages 142—151).

## Claims

1. A method of producing an optical fibre while using a double crucible, the outflow opening of the inner crucible being wholly within the space enclosed by the outer crucible, and the glass in the outer crucible (cladding glass) passing through a channel surrounding the discharge end of the inner crucible, characterized in that a fibre having a core of non-circular cross-section is produced by bounding said channel by at least one non-circular cylindrical wall whereby the glass in the outer crucible passes through said channel before it contacts the glass flowing from the inner crucible (core glass).

2. A method as claimed in claim 1, characterized in that the glass in the outer crucible passes through a channel surrounding the discharge end of the inner crucible, said channel being bounded by at least one elliptical cylindrical wall before it contacts the glass from the inner crucible.

3. A method as claimed in claim 1, characterized in that before it is contacted with the glass from the inner crucible the glass in the outer crucible passes through a channel of which the interior boundary wall is non-circular cylindrical.

4. A method as claimed in claim 1, characterized in that the cross-section of the outflow opening of the inner crucible is non-circular.

5. A double crucible suitable for the manufacture of optical fibres consisting of an inner crucible the outflow opening of which is wholly within the space enclosed by the outer crucible, the outer crucible having a channel through which the glass in the outer crucible flows before it contacts the glass flowing from the inner crucible, characterized in that at least one of the boundary walls of said channel is non-circular cylindrical.

6. A double crucible as claimed in claim 5, characterized in that the outflow opening of the inner crucible has a non-circular cross-section.

7. A double crucible as claimed in claim 6, characterized in that the outflow opening of the inner crucible has an elliptical cross-section.

## Revendications

1. Procédé de fabrication d'une fibre optique à l'aide d'un double creuset, l'ouverture d'écoulement du creuset intérieur étant entièrement sitée dans l'espace enfermé par le creuset exterieur, et le verre contenu dans le creuset extérieur (verre de gaine) passant par un canal entourant l'extrémité de décharge du creuset intérieur, caractérisé en ce qu'une fibre présentant un noyau d'une section transversale non circulaire est réalisée par délimitation dudit canal par au moins une paroi cylindrique non circulaire, le verre du creuset extérieur passant par ledit canal avant d'entrer en contact avec le verre circulant à partir du creuset interieur (verre de novau).

2. Procédé selon la revendication 1, caractérisé en ce que le verre contenu dans le creuset extérieur passe par un canal entourant l'extrémité de charge du creuset intérieur, ledit canal étant délimité par au moins une paroi cylindrique elliptique avant d'entrer en contact avec le verre du creuset intérieur.

3. Procédé selon la revendication 1, caractérisé en ce qu'avant d'entrer en contact avec le verre du creuset intérieur, le verre contenu dans le creuset extérieur passe par un canal, dont la paroi de délimitation intérieure est cylindrique non circulaire.

4. Procédé selon la revendication 1, caractérisé en ce que la section transversale de l'ouverture d'écoulement du creuset intérieur est non circulaire.

5. Double creuset convenant à la réalisation de fibres optiques constitué par un creuset intérieur dont l'ouverture d'écoulement se situe entièrement dans l'espace enfermé par le creuset extérieur, le creuset, extérieur présentant un canal par lequel circule le verre du creuset extérieur avant d'entrer en contact avec le verre circulant à partir du creuset intérieur, caractérisé en ce qu'au moins l'une des parois de délimitation dudit canal est cylindrique et non circulaire.

6. Double creuset selon la revendication 5, caractérisé en ce que l'ouverture d'écoulement du creuset intérieur présente une section transversale non circulaire.

7. Double creuset selon la revendication 6, caractérisé en ce que l'ouverture d'écoulement du creuset intérieur présente une section transversale elliptique.

## Patentansprüche

1. Verfahren zur Herstellung einer optischen Faser unter Verwendung eines Doppeltiegels, wobei die Ausströmungsöffnung des Innentiegels völlig innerhalb des von dem Aussentiegel eingeschlossenen Raumes liegt, und das Glas in dem Aussentiegel (Mantelglas) durch einen Kanal geht, der das Abführungsende des Innentiegels umgibt, dadurch gekennzeichnet, dass eine Faser mit einem Kern mit einem nichtkreisrunden Querschnitt dadurch hergestellt wird, dass der genannte Kanal durch wenistens eine nicht-kreisrunde zylinderförmige Wand begrenzt wird, wobei das Glas in dem Aussentiegel durch den genannten Kanal geht bevor es das Glas, das aus dem Innentiegel fliesst (Kernglas (kontaktiert.

2. Verfahren nach Anspruch 1, dadurch gekennzeichnet, dass das Glas in dem Aussentiegel durch einen Kanal geht, der das Abführungsende des Innentiegels umgibt, wobei der genannte Kanal durch wenigstens eine elliptische zylinderförmige Wand begrenzt wird, bevore es das Glas aus dem Innentiegel kontaktiert.

3. Verfahren nach Anspruch 1, dadurch gekennzeichnet, dass das Glass in dem Aussentiegel, bevor es das Glas aus dem Innentiegel kontaktiert, durch einen Kanal geht, dessen innere Begrenzungswand nicht kreiszylindrisch ist.

4. Verfahren nach Anspruch 1, dadurch gekennzeichnet, dass der Querschnitt der Ausströmungsöffnung des Innentiegels nicht kreisrund ist.

5. Doppeltiegel geeignet zur Herstellung optischer Fasern, der besteht aus einem Innentiegel, dessen Ausströmungsöffnung sich völlig in dem von dem Aussentiegel eingeschlossenen Raum befindet, wobei der Aussentiegel einen Kanal hat, durch den das Glas in dem Aussentiegel fliesst bevor es das Glas, das aus dem Innentiegel fliesst, kontaktiert, dadurch gekennzeichnet, dass wenigstens eine der Begrenzungswände des gennanten Kanals nicht kreiszylindrisch ist.

6. Doppeltiegel nach Anspruch 5, dadurch gekennzeichnet, dass die Ausströmungsöffnung des Innentiegels einen nicht-kreisrunden Querschnitt hat.

7. Doppeltiegel nach Anspruch 6, dadurch gekennzeichnet, dass die Ausströmungsöffnung des Innentiegels einen elliptischen Querschnitt hat.

0 047 037

FIG.1 FIG.2 FIG.3A FIG.3 FIG.4 FIG.5 FIG.7 FIG.6 FIG.8

1